# EUROPEAN PATENT APPLICATION

(11) **EP 1 613 080 A2**
(43) Date of publication of application: **04.01.2006**
(21) Application number: 05104629.0
(22) Date of filing: 30.05.2005
(51) Int. Cl.: H04N 7/01, H04N 5/208

(54) **Apparatus and method for processing video signal**

(30) Priority: 30.06.2004 JP 2004194682
(71) Applicant: KABUSHIKI KAISHA TOSHIBA, Tokyo 105-8001 (JP)
(72) Inventor: Namioka, Toshiyuki, 105-8001, Tokyo (JP)
(74) Representative: Henkel, Feiler & Hänzel

(57) **Abstract**

An apparatus for processing a video signal comprises a circuit (36c) for performing a first order differentiation processing to a received video signal, a circuit (36d) for adjusting a level of a video signal with the first order differentiation processed thereto, a circuit (36g) for generating a pixel position signal indicating an output pixel position on the basis of a scaling coefficient to acquire an output video signal from the received video signal, a circuit (36e) for adding an output signal from the circuit (35d) to the generated pixel position signal and acquiring a corrected pixel position signal, and a circuit (36b) for performing a scaling calculation processing to the received video signal and acquiring a scaled video signal, on the basis the corrected pixel position signal.

## Description

The present invention relates to an apparatus and a method for processing a video signal for displaying a video signal on, for example, a flat panel type display, and specifically, relates to an improvement in a scaling function for converting its input video signal to one having a resolution matched to the pixels of a relevant display panel.

In the case of a video display on a cathode ray tube (CRT), it is possible for sharpness of displayed video to be improved by conducting so-called scanning speed modulation to vary a scanning speed of an electron beam in response to a video signal.

Meanwhile, in recent years, a flat panel type display using, for example, a liquid crystal panel or a plasma display panel has become widely used. On this kind of the flat panel type display, a video projection type, a so-called a projector tends to become widely used.

Since such a flat panel type display has no structure to scan an electron beam then cannot utilize the above-described technique of scanning speed modulation, so that the display enhances the sharpness of the displayed video by mainly conducting contour correction processing.

Jpn. Pat. Appln. KOKAI Publication No. 2003-259155 discloses a technique, wherein the technique generates a first order differentiation signal indicating a direction of a contour and a second order differentiation signal indicating an intensity of the contour from an input video signal and corrects the contour of the video signal by using a signal combining the first and second order differentiation signals.

In view of the foregoing, an object of the present invention is to provide an apparatus and a method for processing a video signal capable of generating a video signal with high sharpness of a display video by using scaling processing to convert an input video signal to a video signal having a resolution matched to output pixels.

According to an embodiment of the present invention, an apparatus for processing a video signal comprises a receiving unit which receives a broadcast signal, a processing unit which recovers a video signal from the broadcast signal received by the receiving unit, a first order differentiation unit which performs first order differentiation processing to the video signal received by the receiving unit, a level adjusting unit which adjusts a level of the video signal to which the first order differentiation processing is performed by the first order differentiation unit, an arithmetic unit which calculates a scaling coefficient to acquire a video signal to be output, from the video signal recovered by the processing unit; a generation unit which generates a pixel position signal indicating a pixel position to which a pixel should be output on the basis of a scaling coefficient to acquire a video signal to be output, from the received video signal by the receiving unit, an adder unit which acquires a corrected pixel position signal by adding the pixel position signal generated from the generation unit to an output signal from the level adjusting unit, and a calculation unit which acquires a scaled video signal by performing scaling calculation processing to the video signal received by the receiving unit on the basis of the corrected pixel position signal output from the adder unit.

According to an another embodiment of the present invention, a method for processing a video signal comprises a first step of receiving a video signal, a second step of performing first order differentiation processing to the received video signal, a third step of adjusting a level of the video signal with the first order differentiation processing performed thereto, a fourth step of generating a pixel position signal indicating a pixel position to which a pixel should be output on the basis of a scaling coefficient to acquire a video signal to be output, from the video signal received in the first step, a fifth step of acquiring a corrected pixel position signal by adding the output signal from the third step to the generated pixel position signal, and a sixth step of acquiring a scaled video signal by performing scaling calculation processing to the video signal received in the first step on the basis of the corrected pixel position signal.

According to the invention mentioned above, it becomes possible to generate, from the video signal, a pixel at a position at which the video signal becomes temporally behind in comparison to an original pixel output position at a variation point at which the video signal varies into a low level and output the generated pixel from the original pixel output position, and it becomes possible to generate, from the video signal, a pixel at a position at which the generated pixel becomes temporally ahead in comparison to the original pixel output position at a variation point at which the video signal varies into a high level and output the generated pixel from the original pixel output position, by using the corrected pixel position signal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an embodiment of the invention and a front elevation view showing an external appearance of a television (TV) receiving apparatus;
FIG. 2 is a side elevation view showing the external appearance of the TV receiving apparatus in the embodiment;
FIG. 3 is a block diagram showing an example of a signal processing system of the TV receiving apparatus in the embodiment;
FIG. 4 is a rear elevation view showing the external appearance of the TV receiving apparatus in the embodiment;
FIG. 5 is a block diagram sowing an example of a scaling unit of the TV receiving apparatus in the embodiment;
FIG. 6 is a block diagram showing an example of a horizontal scaling unit of the scaling unit in the embodiment;
FIG. 7 is a view for explaining operations of scaling processing using an uncorrected horizontal pixel position signal of the horizontal scaling unit in the embodiment and shows an example of a video signal supplied to an input terminal;
FIG. 8 is a view for explaining the operations of the scaling processing using the uncorrected horizontal pixel position signal of the horizontal scaling unit in the embodiment and shows an example of a scaled video signal output from a scaling calculation processing circuit;
FIG. 9 is a view for explaining operations of scaling processing using a corrected horizontal pixel position signal of the horizontal scaling unit in the embodiment and shows an example of a first order differentiation signal output from a first order differentiation circuit;
FIG. 10 is a view for explaining the operations of the scaling processing using the corrected horizontal pixel position signal of the horizontal scaling unit in the embodiment and shows an example of a video signal supplied to the input terminal;
FIG. 11 is a view for explaining the operations of the scaling processing using the corrected horizontal pixel position signal of the horizontal scaling unit in the embodiment and shows an example of a scaled video signal output from the scaling calculation circuit;
FIG. 12 is a flowchart showing an example of main scaling processing operations of the horizontal scaling unit in the embodiment;
FIG. 13 is a block diagram showing an example of a vertical scaling unit of the scaling unit in the embodiment;
FIG. 14 is a view for explaining an example of a display state of a video signal before being performed scaling processing by the scaling unit in the embodiment;
FIG. 15 is a view for explaining an example of a display state of a video signal after being performed scaling processing by the scaling unit in the embodiment;
FIG. 16 is a block diagram showing an another example of the horizontal scaling unit in the embodiment;
FIG. 17 is a view for explaining another scaling operations of the horizontal scaling unit in the embodiment and shows an example of a second order differentiation signal output from the first order differentiation circuit;
FIG. 18 is a view for explaining another scaling processing operations of the horizontal scaling unit in the embodiment and shows an example of a video signal supplied to the input terminal;
FIG. 19 is a view for explaining another scaling processing operations of the horizontal scaling unit in the embodiment and shows an example of a scaled video signal output from the scaling calculation processing circuit;
FIG. 20 is a view showing main scaling processing operations of another example of the horizontal scaling unit in the embodiment;
FIG. 21 is a view showing an example of a level adjusting screen of another example of the horizontal scaling unit in the embodiment;
FIG. 22 is a block diagram showing another example of the vertical scaling unit in the embodiment;
FIG. 23 is a block diagram showing an example of a set top box (STB) with the invention adopted thereto; and
FIG. 24 is a block diagram showing an example of a personal digital assistant (PDA) with the invention adopted thereto.

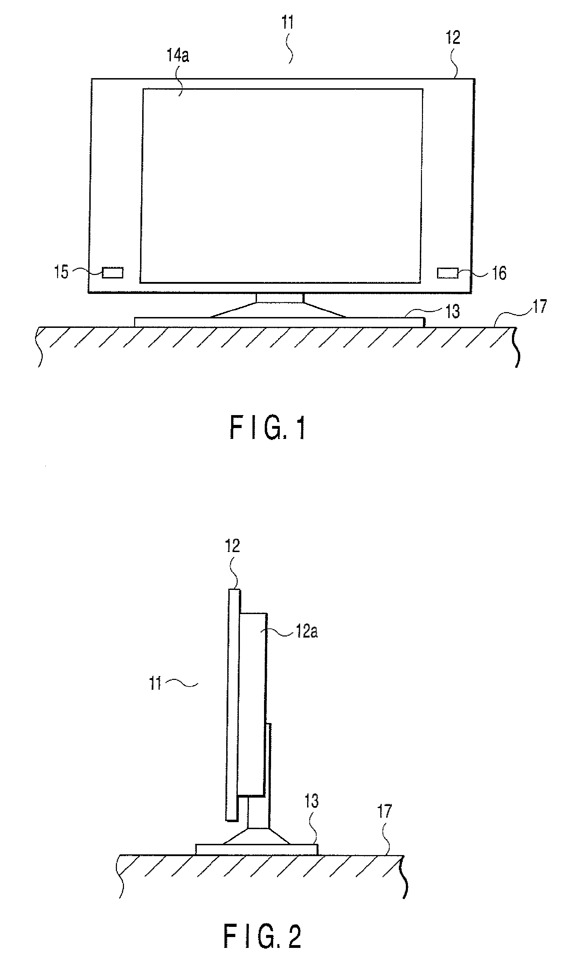

Hereinafter the details of embodiments of the present invention will be explained by referring to drawings. FIG. 1 and FIG. 2 show a front view and a side view of a TV receiving apparatus 11 of a flat panel type which will be explained in this embodiment, respectively.

The TV receiving apparatus 11 is composed of mainly a cabinet 12, a support base 13 to support the cabinet 12. A front center part of the cabinet 12 is provided with a display panel 14a of a below-mentioned video display unit 14.

On the both sides of the display panel 14a of the cabinet 12 is provided with a power switch 15 and a receiving unit 16 for receiving operation information transmitted from a wireless remote controller (not shown). Moreover, a housing unit 12a with a below-mentioned signal processing system housed therein is disposed on the rear side of the cabinet 12.

The support base 13 is rotatably connected to a rear central part of the cabinet 12 and configured to make the cabinet 12 stand rise in a state that the support base 13 is mounted on a horizontal surface of a prescribed base stand 17.

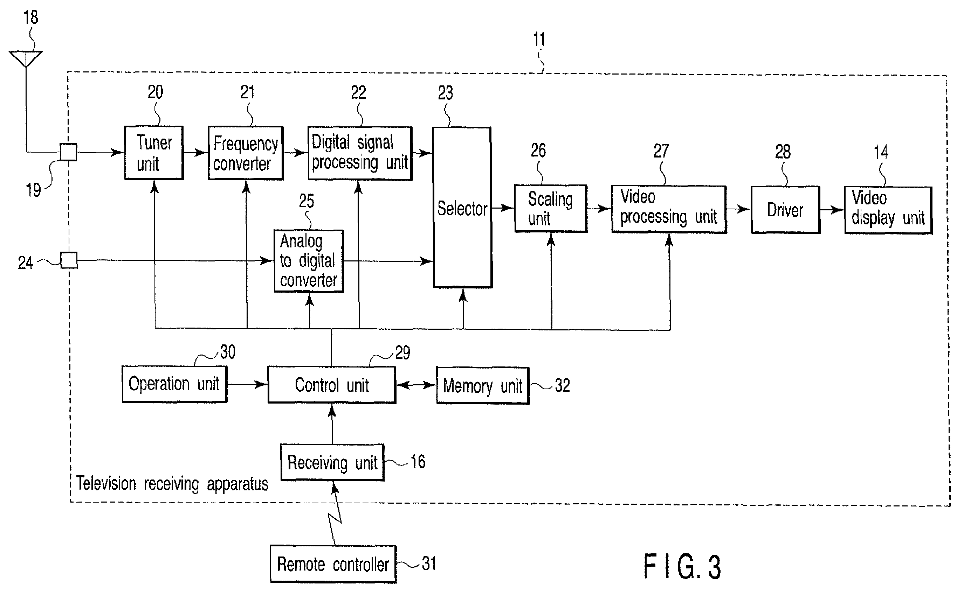

FIG. 3 shows the signal processing system of the TV receiving apparatus 11. A TV broadcast signal received at an antenna 18 is supplied to a tuner unit 20 through an input terminal 19 then a broadcast signal of a prescribed channel is tuned.

The broadcast signal output from the tuner unit 20 is supplied to a frequency converter 21 to be converted into an intermediate signal then recovered to a digital video signal by means of a digital signal processing unit 22, and supplied to a selector 23.

The TV receiving apparatus 11, meanwhile, receives a video signal generated in a component format or an RGB format from an external arbitrary source via an input terminal 24. The video signal supplied to the input terminal 24 is supplied to an analog-to-digital converter 25 to be converted into a digital signal then supplied to the selector 23.

The selector 23 selectively derives two kinds of input video signals to a scaling unit 26. The scaling unit 26 performs scaling processing to the input video signal so as to match the number of pixels of the input video signal to the number of the pixels of the display panel 14a of the video display unit 14 and outputs the scaling-processed video signal to a video processing unit 27.

The video processing unit 27 performs a variety kinds of signal processing for the input video signal so as to make a video display on the video display unit 14. The video signal output from the video processing unit 27 is supplied to the video display unit 14 via a driver 28 to make the video display.

The whole operations including a variety of receiving operations described above of the TV receiving apparatus 11 are generally controlled by a control unit 29. The control unit 29 incorporates a central processing unit (CPU) (not shown), etc., receives operation information from an operation unit 30 including a power switch 15, or receives operation information transmitted from a remote controller 31 through the receiving unit 16 and respectively controls each unit so as to reflect operation contents in the operation information thereto.

The control unit 29, in this case, utilizes a memory unit 32. The memory unit 32 is composed of mainly a dedicated memory (not shown) with a control program to be executed by a CPU in the control unit 29 stored thereon, a read/write memory (not shown) to provide a working area to the CPU, and a nonvolatile memory (not shown) in which a variety of setting information and control information, etc., is stored.

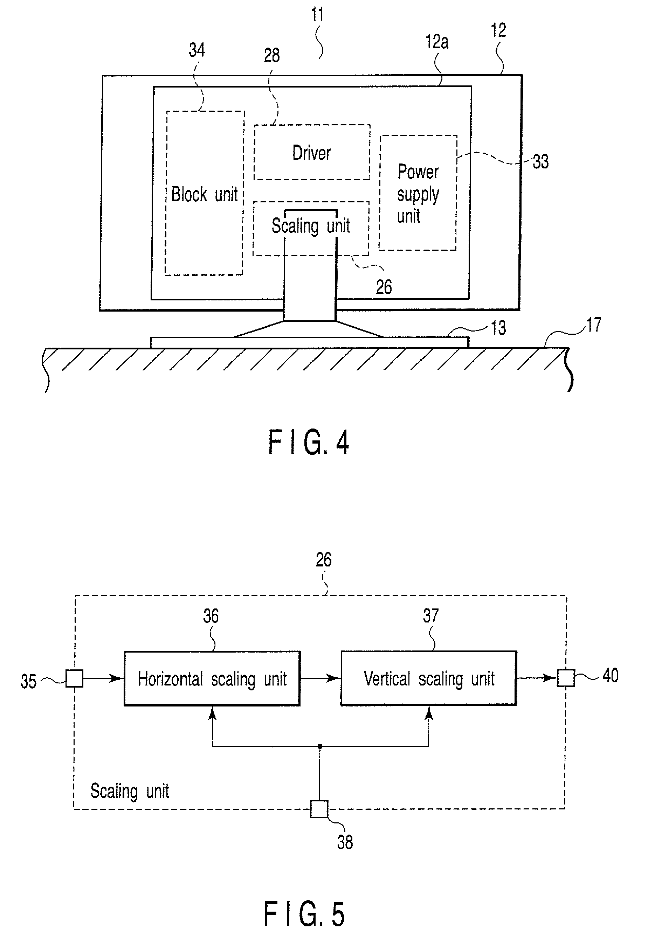

FIG. 4 shows a rear view of the TV receiving apparatus 11. In the housing unit 12a of the cabinet 12, the driver 28 and the scaling unit 26 are disposed at its center part, a power supply unit 33 is disposed on the right side in FIG. 4, and a block unit 34 including other units is disposed on the left side in FIG. 4.

FIG. 5 shows the details of the scaling unit 26 above described. The video signal output from the selector 23 is supplied to a horizontal scaling unit 36 through an input terminal 35.

The horizontal scaling unit 36 performs scaling processing to a horizontal component of the input video signal on the basis of the scaling coefficient supplied through a control terminal 38 from the control unit 29 and outputs the scaling-processed horizontal component to a vertical scaling unit 37.

The vertical scaling unit 37 performs scaling processing to a vertical component of the input video signal on the basis of the scaling coefficient supplied through the control terminal 38 from the control unit 29.

The scaling units 36, 37 generate a video signal with scaling processing horizontally and vertically performed thereto, and output the scaling-processed video signal to the video processing unit through an output terminal 40.

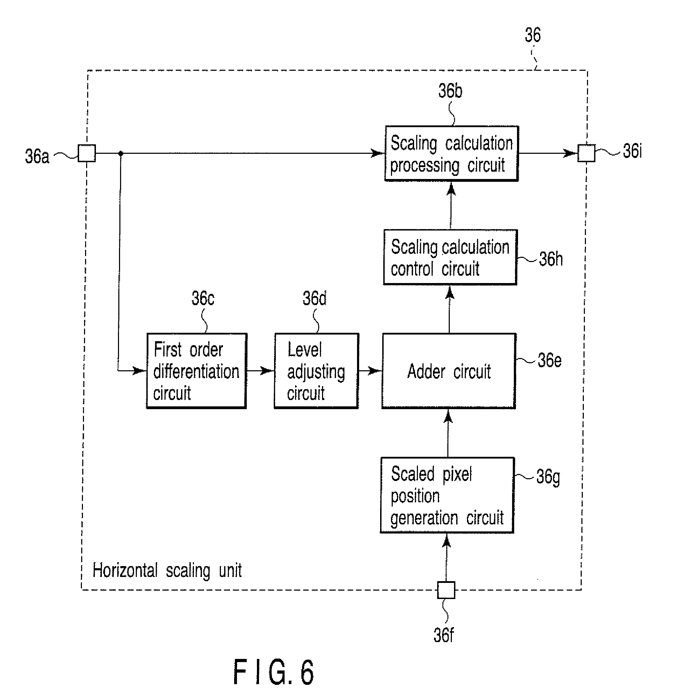

FIG. 6 shows the details of the horizontal scaling unit 36. The video signal supplied to an input terminal 36a is respectively supplied to a scaling calculation circuit 36b and a first order differentiation circuit 36c.

The first order differentiation circuit 36c conducts first order differentiation to the horizontal component of the input video signal. Thereby, if variations in horizontal component of the video signal occur, the differentiation circuit 36c generates a first order differentiation signal indicating its variation points and variation directions.

The first order differentiation signal output from the differentiation circuit 36c is supplied to a level adjusting circuit 36d to be respectively adjusted modulation levels at each pixel position, then, output to an adder circuit 36e.

The scaling coefficient output from the control unit 29 is supplied to a control terminal 36f. The scaling coefficient indicates a ratio to compress or extend the video signal and supplied to a scaled pixel position generation circuit 36g.

The generation circuit 36g calculates an output pixel position in a horizontal direction on the basis of the input scaling coefficient, generates a horizontal pixel position signal indicating its output pixel position and outputs the position signal to the adder circuit 36e.

The adder circuit 36e adds a signal of which modulation levels at each pixel position of the first order differentiation signal from the adjusting circuit 36d are respectively adjusted to the horizontal pixel position signal from the generation circuit 36g so that the corrected horizontal pixel position signal is generated to be supplied to a scaling calculation control circuit 36h.

The control circuit 36h generates a scaling calculation control signal on the ground of the corrected horizontal pixel position signal and outputs the control signal to a scaling calculation processing circuit 36b. The processing circuit 36b performs scaling calculation processing to the input video signal on the basis of the corrected horizontal pixel position signal, accordingly, the video signal, of which the horizontal component is scaling-processed, is generated and extracted from an output terminal 36i.

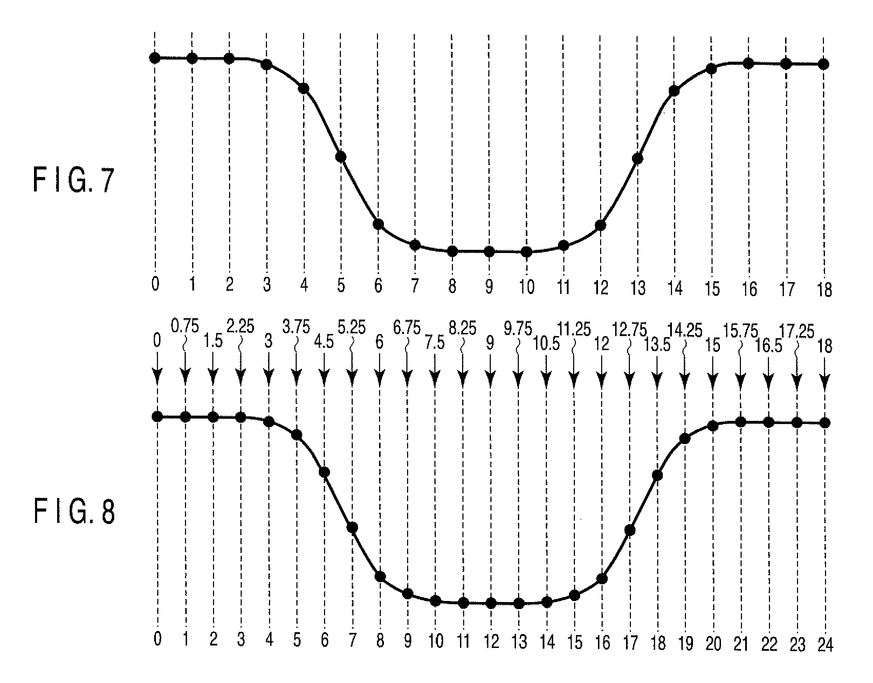

Subsequently, operations of the horizontal scaling unit 36 are specifically explained. FIG. 7 and FIG. 8 show operations in the case that the horizontal pixel position signal output from the generation circuit 36g is supplied to the control circuit 36h, as it is, without adding the output signal from the adjusting circuit 36h, that is, without correcting the horizontal pixel position signal output from the generation circuit 36g.

FIG. 7 shows the video signal supplied to the input terminal 36a, FIG. 8 shows the scaled video signal output from the processing circuit 36b and the scaling coefficient becomes 3/4 (=0.75). In FIG. 7 and FIG. 8, vertical dot lines indicate sampling positions and points with black circles indicate sample values of the video signals, respectively.

In this case, the horizontal pixel position signals are fixed to 0.75 in those sampling intervals. The processing circuit 36b, thereby, generates the scaled video signal having sample values at each position of the horizontal pixel positions of 0, 0.75, 1.5, 2.25 to 18 from the input video signal.

Consequently, the processing circuit 36b generates pixels at the positions with sampling interval of 0.75 from the input video signal having pixels at positions with sampling interval of 1.0. The processing circuit 36b then generates a scaled video signal having the number of pixels which is one such that the number of the input video signal is extended to 4/3 times in the horizontal direction.

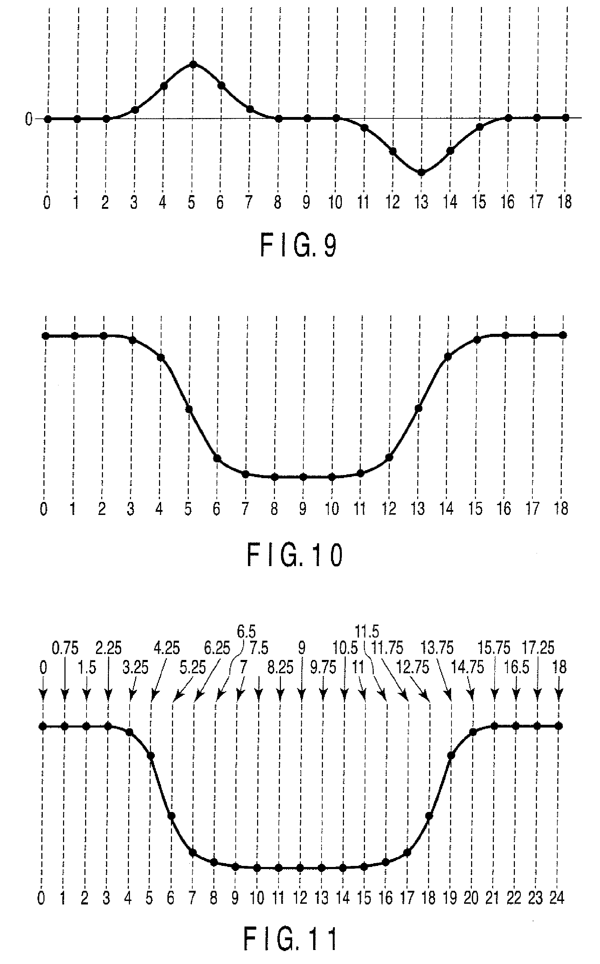

FIG. 9 to FIG. 11 show operations in the case that the horizontal scaling unit 36 adds the output signal from the adjusting circuit 36d to the horizontal pixel position signal output from the generation circuit 36g, that is, show operations in the case that the horizontal scaling unit 36 supplies the corrected horizontal pixel position signal to the control circuit 36h.

FIG. 9 shows the first order differentiation signal output from the first order differentiation circuit 36c, FIG. 10 shows the video signal supplied to the input terminal 36a, FIG. 11 shows the scaled video signal output from the processing circuit 36b, and the scaling coefficient has become 3/4 (=0.75).

In this case, the first order differentiation signal is a such a signal that has a positive polarity at the variation point at which the level of the input video signal varies from a high level to a low level and has a negative polarity at the variation point at which the level of the input video signal varies from a low to a high level.

In a state of no level variation of the input video signal, in other words, in the state of zero level of the first order differentiation signal, the horizontal pixel position signal output from the adder circuit 36e is the same signal as one output from the generation circuit 36g, so that as explained in FIG. 7 and FIG. 8, the horizontal scaling unit 36 generates pixels at positions with sampling intervals of 0.75 from the input signal with sampling intervals of 1.0 and generates the scaled video signals to be output at the positions mentioned above.

In contrast, in a period in which the first order differentiation signal becomes positive, the horizontal pixel position signal output from the adder circuit 36e is corrected so that the sampling intervals become partially wider than 0.75 which is an original sampling interval.

As shown in FIG. 11, accordingly, the scaling unit 36 generates pixels at each horizontal pixel position of 3.25, 4.25, 5.25, 6.25, 6.5 and 7.0 from the input video signal, respectively, and generates scaled video signals in which generated each pixel is output at positions of 3, 3.75, 4.5, 5.25, 6 and 6.75 (4, 5, 6, 7, 8 and 9 in FIG. 11) being original output positions.

That is, in the period in which the first order signal becomes positive in polarity, the scaling unit 36 generates pixels at the position at which the video signal becomes temporally behind in comparison to an original pixel output position and outputs the generated pixel from the original pixel output position.

On the other hand, in the period in which the first order differentiation signal becomes negative in polarity, the horizontal pixel position signal output from the adder circuit 36e is corrected so that the sampling intervals become partially narrower than 0.75 being the original sampling interval.

Thereby, as shown in FIG. 11, the scaling unit 36 generates pixels at each horizontal position of 11, 11.5, 11.75, 12.75, 13.75 and 14.75 from the input video signal, respectively, and generates scaled video signals in which generated each pixel is output at positions of 11.25, 12, 12.75, 13.5, 14.25 and 15.0 (15, 16, 17, 18, 19 and 20 in FIG. 11) being original output positions.

That is to say, in the period in which the first order differentiation signal becomes negative in polarity, the scaling unit 36 generates pixels at the positions at which the video signal becomes temporally ahead in comparison to an original pixel output positions and outputs the generated pixels from the original pixel output positions.

As stated above, the scaled video signal output from the processing circuit 36b can be sharpened in slope at its level variation points by being corrected to the horizontal pixel position signal, as shown in FIG. 11, and can be enhanced in sharpness of the display video, in comparison to the case of FIG. 8.

Accordingly, assuming that a low level of the input video signal is a black level, a black level period of the scaled video signal shown in FIG. 11 becomes longer than the black level period of the scaled video signal shown in FIG. 8, so that the video display thick and clear in black can be achieved.

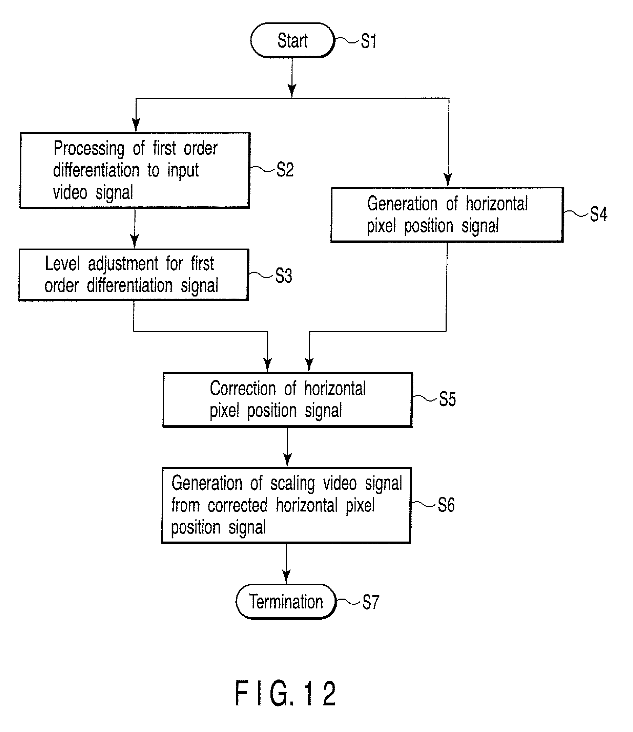

FIG. 12 shows the flowchart as a whole of operations of the above-mentioned horizontal scaling unit 26. When the scaling unit 26 starts its operations (step S1), the first order differentiation circuit 36c performs the first order differentiation processing to the horizontal component of the input video signal (step S2), and the level adjusting circuit 36d adjusts the modulation levels at each pixel position of the first order differentiation signal, respectively (step S3).

At the same time, when the scaling unit 26 starts its operations (step S1), the scaled pixel position generation circuit 36g generates and outputs the horizontal pixel position signal on the basis of the scaling coefficient supplied to the control terminal 36f (step 4). The adder circuit 36e corrects the horizontal pixel position signal by the output from the level adjusting circuit 36d (step S5).

The scaling calculation control circuit 36h and the scaling calculation processing circuit 36b execute the scaling calculation processing on the basis the previously corrected horizontal pixel position signal then the scaling unit 26 terminates the processing (step 7).

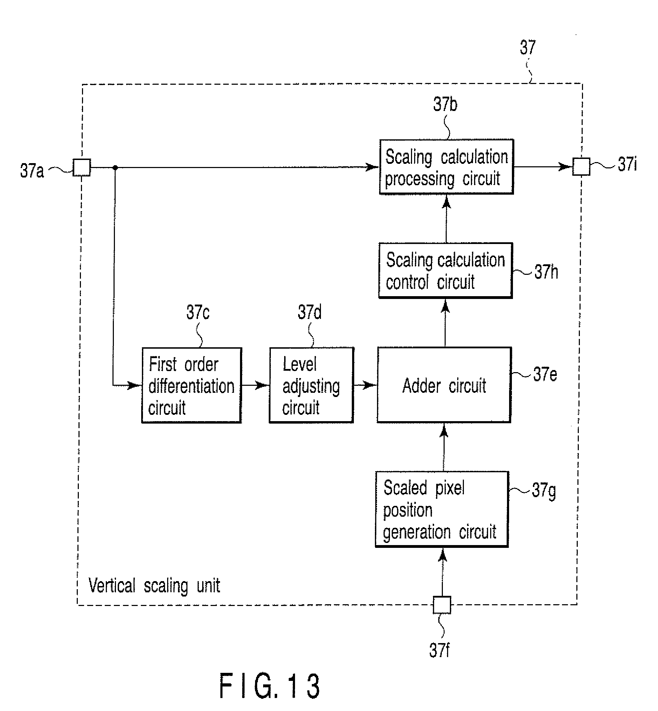

FIG. 13 shows the details of the vertical scaling unit 37 mentioned above. The video signal supplied to the input terminal 37a is respectively supplied to the scaling calculation processing circuit 37b and the first order differentiation circuit 37e.

The differentiation circuit 37c conducts the first order differentiation processing to the vertical component of the input video signal. Thereby, when the level of the vertical component of the video signal is varied, the differentiation circuit 37c generates the first order differentiation signal indicating its variation points and the direction of the variations.

The first order differentiation signal output from the differentiation circuit 37c is supplied to the level adjusting circuit 37d to be respectively adjusted the modulation levels at each pixel position and then output to the adder circuit 37e.

At the same time, the scaling coefficient output from the control unit 29 is supplied to the control terminal 37f. The scaling coefficient indicates the ratio of compression or extension for the video signal and supplied to the scaled pixel position generation circuit 37g.

The generation circuit 37g calculates output pixel positions in the vertical direction in accordance with the input scaling coefficient, generates the vertical pixel position signal indicating the output pixel position and outputs the position signal to the adder circuit 37e.

The adder circuit 37e adds a signal in which the modulation levels at each pixel position of the first order differentiation signal from the level adjusting circuit 37d are respectively adjusted to the vertical pixel position signal from the scaled pixel position generation circuit 37g. Then, the corrected vertical pixel position signal is generated and supplied to the scaling calculation control circuit 37h.

The control circuit 37h generates the scaling calculation control signal on the ground of the corrected vertical pixel position signal and outputs it to the scaling calculation processing circuit 37b. This processing circuit 37b conducts the scaling calculation processing to the input video signal on the basis of the corrected vertical pixel position signal, then, generates the video signal of which the vertical component is scaling-processed, and outputs the video signal from the output terminal 37i.

The specific explanation about operations of the vertical scaling unit 37 will be omitted because the operations are almost same as those of the horizontal scaling unit 36 previously explained by referring FIG. 7 to FIG. 12 other than the point that the vertical scaling unit 37 performs its scaling processing in vertical direction.

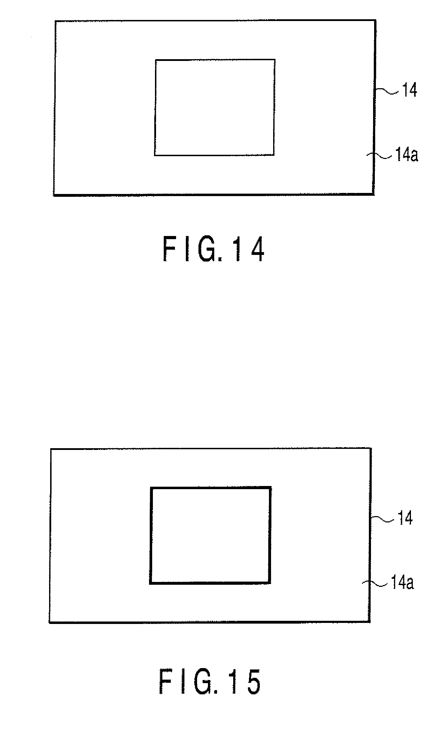

The horizontal scaling unit 36 and the vertical scaling unit 37 combine each video signal in which the scaling processing is horizontally and vertically conducted, respectively. Then, the video display on the video display unit 14 shown in FIG. 14 can be changed from the state in FIG. 4 to the state of the video display with thick and clear black as shown in FIG. 15.

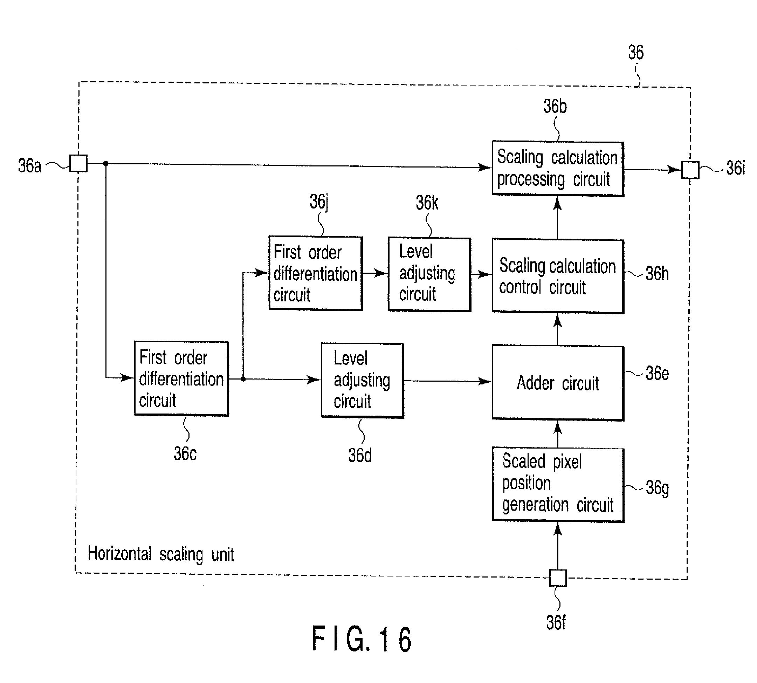

FIG. 16 shows another example of the horizontal scaling unit 36. FIG. 16 will be explained by giving the same reference symbols to the same parts as those of FIG. 6. The first order differentiation signal output from the first order differentiation circuit 36c is supplied to another first order differentiation circuit 36j to be further conducted first order differentiation and generated as a send order differentiation signal.

The send order differentiation signal output from the first order differentiation circuit 36j is supplied to a level adjusting circuit 36k to be adjusted in its level and made as a gain correction signal, then, supplied to the scaling calculation control circuit 36h.

The control circuit 36h, in this case, generates the scaling calculation control signal in accordance with the corrected horizontal pixel position signal from the adder circuit 36e and the gain correction signal from the adjusting circuit 36k, and outputs the control signal to the scaling calculation processing circuit 36b.

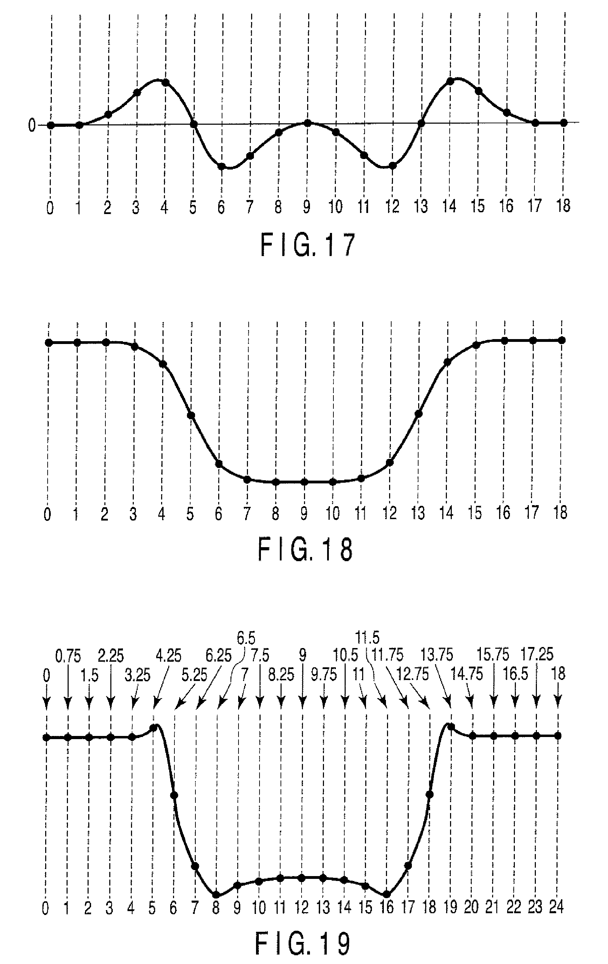

FIG. 17 to FIG. 19 show the operations of the horizontal scaling unit 36 shown in FIG. 16.

FIG. 17 shows the second order differentiation signal output from the first order differentiation circuit 36j, FIG. 18 shows the video signal supplied to the input terminal 36a, FIG. 19 shows the scaled video signal output from the scaling calculation processing circuit 36b, and the scaling coefficient becomes 3/4 (=0.75).

In addition to the correction of the output pixel by the corrected horizontal pixel position signal, gains at the level variation points of the scaled video signal are controlled by a gain correction signal based on the send order differentiation signal, edges at the level variation points can be further enhanced as shown in FIG. 19, and the sharpness of the displayed video can be further enhanced.

Though in a scanning speed modulation means used for a CRT, it is one element for enhancing the sharpness to make the CRT bright and dark when a deflection speed of an electron beam becomes slow and fast, respectively, similar effect can be obtained by enhancing the edges at the level variation points of the scaled video signal using the above-mentioned gain correction signal.

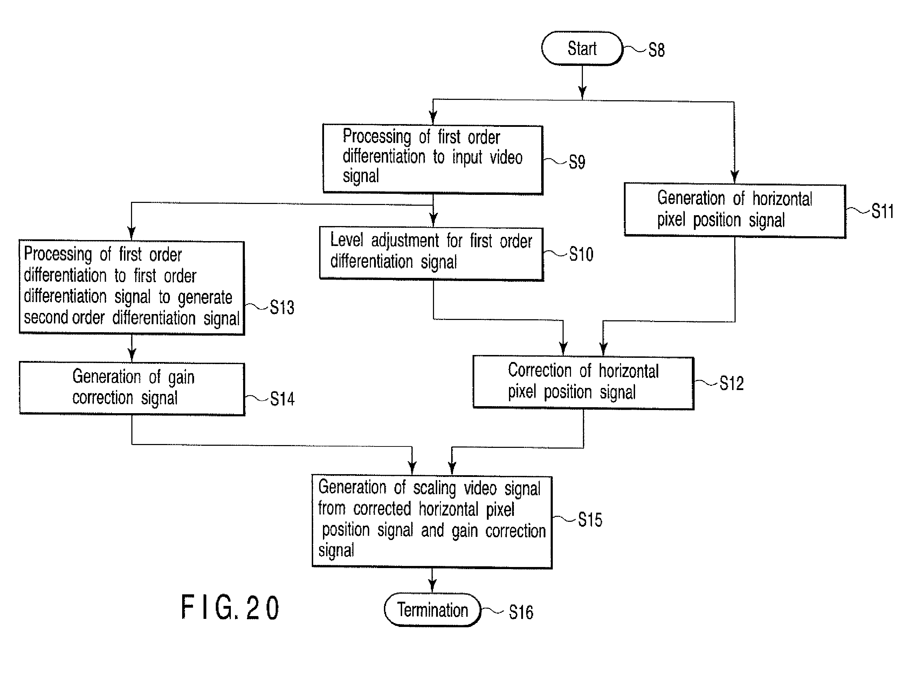

FIG. 20 shows an operation example of the horizontal scaling unit 36 shown in FIG. 16. When the scaling unit 36 starts its processing (step S8), the first order differentiation circuit 36c executes the first order differentiation processing to the horizontal component of the input video signal (step S9), and the level adjusting circuit 36d respectively adjusts the modulation levels at each pixel position of the first order differentiation signal (step S10).

At the same time, when the scaling unit 36 starts the processing (step S8), the scaled pixel position generation circuit 36g generates and outputs the horizontal pixel position signal on the basis of the scaling coefficient supplied to the control terminal 36f (step S11). The adder circuit 36c corrects the horizontal pixel position signal by the output from the level adjusting circuit 36d (step S12).

After step S9, the first order differentiation circuit 36j further executes the first order differentiation processing to the first order differentiation signal to generate the second order differentiation signal (step S13). The level adjusting circuit 36k adjusts the level of the second order differentiation signal and generates the gain correction signal (step S14).

After this, the scaling calculation control circuit 36h and the scaling calculation processing circuit 36b perform the scaling calculation processing on the ground of the previously corrected horizontal pixel position signal and the gain correction signal (step 15) then the processing is terminated (step S16).

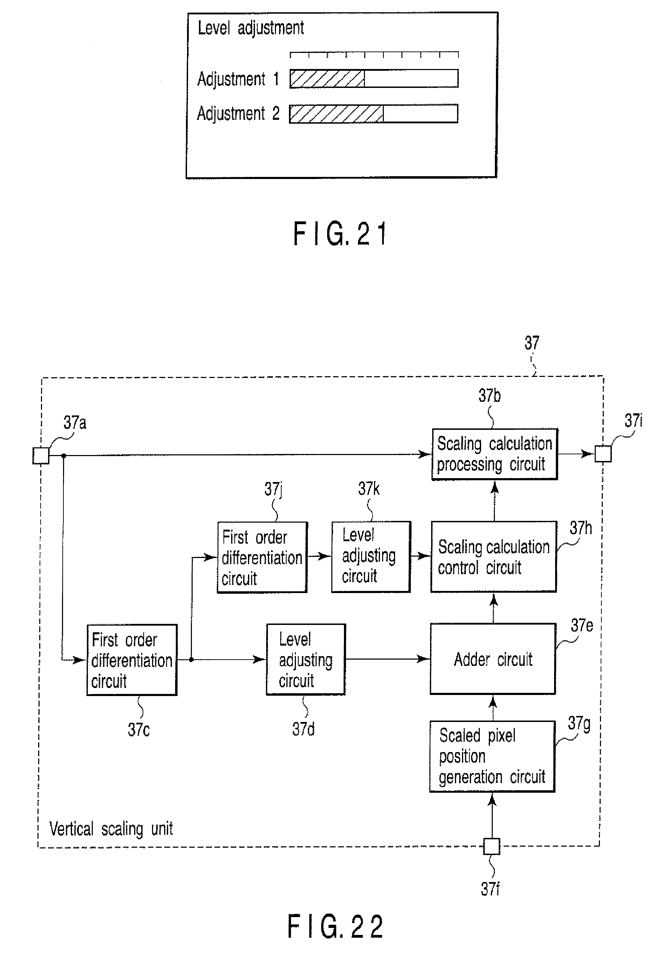

In the horizontal scaling unit 36 shown in FIG. 16, a user can make the level adjustment at the level adjusting circuits 36d, 36k. In this case, if the user requests the level adjustment by operating the operation unit 30 or the remote controller 31, the control unit 29 displays an adjusting screen shown in FIG. 21 onto the video display unit 14 by using an on-screen display (OSD) function.

This level adjusting screen displays "adjustment 1" as a level adjustment item of the level adjusting circuit 35d, displays "adjustment 2" as a level adjustment item of the level adjusting circuit 36k. The user can perform the level adjustment by selecting either the "adjustment 1" of the "adjustment 2" on the adjusting screen.

FIG. 22 shows another example of the vertical scaling unit 37 shown in FIG. 13. FIG. 22 will be explained by putting the same reference symbols to the same parts as those of FIG. 13. The first order differentiation signal output from the first order differentiation circuit 37c is supplied to another first order differentiation circuit 37j and the second order differentiation signal is generated by being processed in additional first order differentiation.

The second differentiation signal output from the first order differentiation circuit 37j is supplied to the level adjusting circuit 37k to be adjusted in level and made as the gain correction signal to be supplied to the scaling calculation control circuit 37h.

The control circuit 37h, in the present case, generates the scaling calculation control signal on the basis of the corrected horizontal pixel position signal from the adder circuit 37e and the gain correction signal from the level adjusting circuit 37k, and outputs the control signal to the scaling calculation processing circuit 37b.

The specific explanation about operations of the vertical scaling unit 37 will be also omitted because the operations are almost same as those of the horizontal scaling unit 36 previously explained by referring FIG. 17 to FIG. 19 and FIG. 20 other than the point that the vertical scaling unit 37 performs its scaling processing in the vertical direction.

It is obvious for the user to be able to perform the level adjustment of the level adjusting circuits 37d and 37k even in the vertical scaling unit 37 shown in FIG. 22.

Though the above-stated embodiments have been explained in the cases that they are applied to the TV receiving apparatus 11, the embodiments are not limited to such cases and possible to be used, for example, for the STB and the PDA.

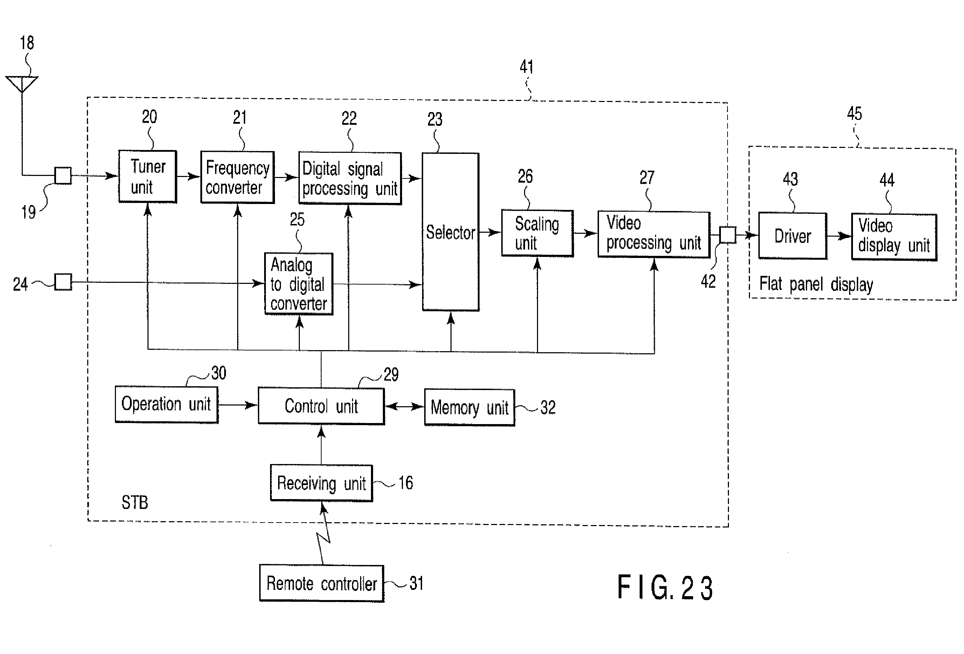

FIG. 23 shows an STB 41. FIG. 23 is going to be explained by giving the same reference symbols to the same parts as those of FIG. 3. The STB 41 makes the video signal generated from the video processing unit 27 possible to be extracted outside through an output terminal 42. In this particular case, a flat pane display 45 equipped with a driver 43 and a video display unit 44 brings the video signal extracted through the output terminal 42 into the video display.

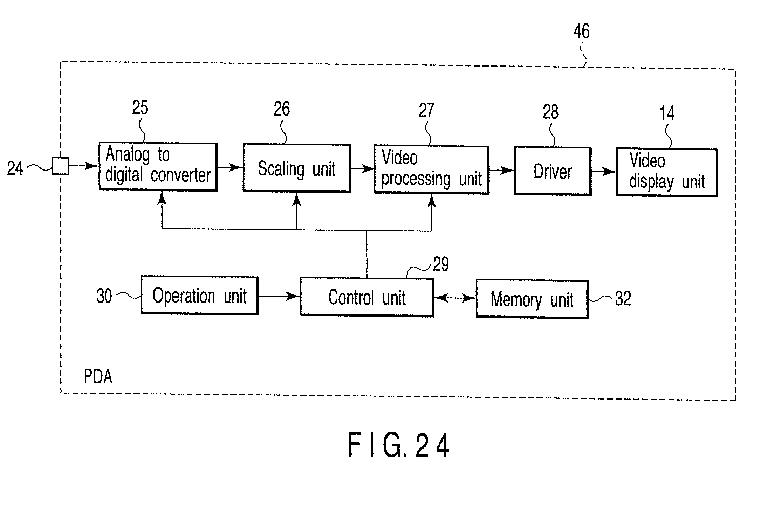

FIG. 24 shows a PDA 46. FIG. 24 is about to be explained by putting the same reference symbols to the same parts as those of FIG. 3. The PDA 46 is one on which the antenna 18, the input terminal 19, the tuner unit 20, the frequency converter 21, the digital signal processing unit 22, the selector 23, the receiving unit 16 and the like are not mounted.

Even for the scaling units 26 of the STB 41 and the PDA 46, the scaling unit 26 with the configuration shown in FIG. 5 can be adopted. In this case, the configurations shown in FIG. 6 and FIG. 16 are possible to be applied to the horizontal scaling unit 36, and the configurations shown in FIG. 13 and FIG. 22 are possible to be applied to the vertical scaling unit 37.

## Claims

1. An apparatus for processing a video signal, **characterized by** comprising:
a receiving unit (20) which receives a broadcast signal,
a processing unit (22) which recovers a video signal from the broadcast signal received by the receiving unit;
a first order differentiation unit (36c) which performs first order differentiation processing to the video signal recovered by the processing unit;
a level adjusting unit (36d) which adjusts a level of the video signal to which the first order differentiation processing is performed by the first order differentiation unit;
an arithmetic unit (29) which calculates a scaling coefficient to acquire a video signal to be output, from the video signal recovered by the processing unit;
a generation unit (36g) which generates a pixel position signal indicating a pixel position to which a pixel should be output on the basis of the scaling coefficient calculated by the arithmetic unit;
an adder unit (36e) which adds an output signal from the level adjusting unit to the pixel position signal generated from the generation unit to acquire a corrected pixel position signal; and
a calculation unit (36b) which acquires a scaled video signal by performing scaling calculation processing to the video signal recovered by the processing unit on the basis of the corrected pixel position signal output from the adder unit.

2. The apparatus for processing the video signal according to claim 1, **characterized by** further comprising a video display unit (14) which makes a video display on the basis of the scaled video signal acquired by the calculation unit.

3. The apparatus for processing a video signal according to claim 1, **characterized by** further comprising a signal output unit (36i) which outputs the scaled video signal acquired by the calculation unit.

4. An apparatus for processing a video signal, **characterized by** comprising:
a receiving unit (24) which receives a video signal,
a first order differentiation unit (36c) which performs first order differentiation processing to the video signal received by the receiving unit;
a level adjusting unit (36d) which adjusts a level of the video signal to which the first order differentiation processing is performed by the first order differentiation unit;
a generation unit (36g) which generates a pixel position signal indicating a pixel position to which a pixel should be output on the basis of a scaling coefficient to acquire a video signal to be output, from the video signal received by the receiving unit;
an adder unit (36e) which adds an output signal from the level adjusting unit to the pixel position signal generated from the generation unit; and
a calculation unit (36b) which acquires a scaled video signal by performing scaling calculation processing to the video signal received by the receiving unit on the basis of the corrected pixel position signal output from the adder unit.

5. The apparatus for processing a video signal according to claim 4, **characterized by** further comprising:
an arithmetic unit (29) which calculates the scaling coefficient and passes the scaling coefficient to the generation unit; and
a video display unit (14) which makes a video display on the basis of the scaled video signal acquired by the calculation unit.

6. The apparatus for processing the video signal according to any one of claims 1 to 5, **characterized in that** the calculation unit comprises:
a first pixel output unit which generates, from the video signal, a pixel at a position at which the video signal becomes temporally behind in comparison to an original pixel output position at a variation point at which the video signal varies into a low level and outputs the generated pixel from the original pixel output position, on the basis of the corrected pixel position signal; and
a second pixel output unit which generates, from the video signal, a pixel at a position at which the video signal becomes temporally ahead in comparison to the original pixel output position at a variation point at which the video signal varies into a high level and outputs the generated pixel from the original pixel output position, on the basis of the corrected pixel position signal.

7. The apparatus for processing the video signal according to claim 6, **characterized by** further comprising:
a second first order differentiation unit (36j) which performs additional first order differentiation processing to the video signal to which the first order differentiation processing is performed by the first order differentiation unit and generates a second order differentiation signal; and
a second level adjusting unit (30k) which adjusts a level of the second order differentiation signal output from the second first order differentiation unit, and
wherein the calculation unit acquires a scaled video signal in which an edge at a level variation point of the video signal is enhanced on the basis of an output signal from the second level adjusting unit.

8. A method for processing a video signal,
**characterized by** comprising:
a first step of receiving a video signal;
a second step of performing a first order differentiation processing to the video signal;
a third step of adjusting a level of the video signal with the first order differentiation processing performed thereto;
a fourth step of generating a pixel position signal indicating a pixel position to which a pixel should be output on the basis of a scaling coefficient to acquire a video signal to be output, from the video signal received in the first step;
a fifth step of acquiring a corrected pixel position signal by adding an output signal from the third step to the generated pixel position signal; and
a sixth step of acquiring a scaled video signal by performing a scaling calculation processing to the video signal obtained in the first step, on the basis of a corrected pixel position signal.

9. The method for processing a video signal according to claim 8, **characterized in that** the fourth step comprises:
calculating the scaling coefficient; and
generating the pixel position signal indicating a pixel position to which a pixel should be output on the basis of the scaling coefficient.

10. The method for processing a video signal according to claim 8, **characterized in that** the first step comprises:
receiving a broadcast signal including a video signal, instead of receiving the video signal;
recovering the video signal from the received broadcast signal; and
passing the recovered video signal to the second step to which the first order differentiation processing.

11. The method for processing a video signal according to claim 8, **characterized by** further comprising a seventh step of outputting the acquired scaled video signal in the sixth step.

12. The method for processing a video signal according to claim 8, **characterized by** further comprising a seventh step of making a video display on the basis of the acquired scaled video signal in the sixth step.

13. The method for processing the video signal according to any one of claims 8 to 12, **characterized in that** the sixth step further comprises:
a step of generating, from the video signal, a pixel at which the video signal becomes temporally behind in comparison to an original pixel output position at a variation point at which the video signal varies into a low level and outputting the generated pixel from the original pixel output position, on the basis of the corrected pixel position signal; and
a step of generating, from the video signal, a pixel at a position at which the video signal becomes temporally ahead in comparison to the original pixel output position at a variation point at which the video signal varies into a high level and outputting the generated pixel from the original pixel output position, on the basis of the corrected pixel position signal.

14. The method for processing the video signal according to claim 13, **characterized by** further comprising:
a step of performing additional first order differentiation processing to the video signal with the first order differentiation processing performed thereto and generating a second order differentiation signal; and
a step of adjusting a level of the second order differentiation signal, and
wherein the sixth step is a step of acquiring a scaled video signal in which an edge at a level variation point of the video signal is enhanced on the basis of the second order differentiation signal in which the level is adjusted.
